# EUROPÄISCHE PATENTANMELDUNG

(11) **EP 1 160 039 A2**
(43) Veröffentlichungstag der Anmeldung: **05.12.2001**
(21) Anmeldenummer: 01107102.4
(22) Anmeldetag: 22.03.2001
(51) Int. Cl.: B23D 31/04, B23D 35/00

(54) **Vorrichtung zum Besäumen von Bändern, insbesondere Metallbändern, und Saumstreifenschneiden von im Zuge des Besäumens erzeugten Saumstreifen**

(30) Priorität: 02.06.2000 DE 10027470
(71) Anmelder: BWG BERGWERK- UND WALZWERK-MASCHINENBAU GMBH, D-47051 Duisburg (DE)
(72) Erfinder: Noé, Andreas, Dr.mont., Dipl.-Ing., 47647 Kerken (DE); Noé, Rolf, Dipl.-Ing., 45478 Mülheim/Ruhr (DE); Yildirimman, Ertan, Dipl.-Ing., 45478 Mülheim/Ruhr (DE)
(74) Vertreter: Honke, Manfred, Dr.-Ing.

(57) **Zusammenfassung**

Es handelt sich um eine Vorrichtung zum Besäumen von Metallbändern und Saumstreifenschneiden mit Drehtellern und jeweils zwei auf einem Drehteller angeordneten Besäumköpfen und zwei Saumstreifenschneidköpfen, von denen sich jeweils ein Besäumkopf und ein Saumstreifenschneidkopf in Betriebstellung bzw. Wartestellung befinden. Auf jedem Drehteller sind die beiden Besäumköpfe mit den ihnen zugeordneten Saumstreifenschneidköpfen in Tellerdraufsicht in einem Winkel von 180° mit in entgegengesetzter Richtung positionierten Saumstreifenschneidköpfen angeordnet. Daraus resultiert eine besonders kompakte Bauweise, die mit lediglich einer Wartestellung für den Messerwechsel bei jeweils einem Besäumkopf und einem Saumstreifenschneidkopf auskommt.

## Beschreibung

Die Erfindung betrifft eine Vorrichtung zum Besäumen von Bändern, insbesondere Metallbändern, und Saumstreifen von im Zuge des Besäumens erzeugten Saumstreifen, mit beidseitig des jeweiligen Metallbandes angeordneten und in Bezug auf die Bandbreite verstellbaren Drehtellern mit jeweils zwei auf einem Drehteller angeordneten Besäumköpfen und Saumstreifenschneidköpfen, von denen sich auf jedem Drehteller jeweils ein Besäumkopf und ein Saumstreifenschneidkopf in Betriebstellung und ein Besäumkopf und ein Saumstreifenschneidkopf in Wartestellung befinden. - Die Erfindung umfasst auch das Besäumen und Saumstreifenschneiden von Metallblechen.

Metallbänder oder Metallbleche werden regelmäßig randseitig beschnitten und folglich besäumt, um eine definierte konstante Band- bzw. Blechbreite zu erzielen und mögliche Band- bzw. Blechkantenbeschädigungen zu entfernen. Das Besäumen von insbesondere Metallbändern erfolgt häufig in Bandbehandlungslinien im Durchlauf mit antriebs- und bedienseitigen Besäumköpfen. Die beiden Besäumköpfe weisen Kreismesserpaare auf und sind in Bandbreitenrichtung zur Bandbreiteneinstellung verfahrbar. Der Schneidspalt der Kreismesserpaare und die Messerüberdeckung von Obermesser und Untermesser der Besäumköpfe können zur Minimierung des Schnittgrates und zur Verlängerung der Messerstandzeiten eingestellt werden. Die im Zuge des Besäumens erzeugten Saumstreifen können auf verschiedene Weise entsorgt werden, z. B. durch Zerschneiden mit Hilfe von Saumstreifenschneidköpfen. Das Saumstreifenschneiden wird im Allgemeinen für Banddicken bis zu 15 mm eingesetzt. Die Saumstreifenschneidköpfe weisen Messertrommeln auf, die an ihrem Umfang mit Messern bestückt sind und miteinander kämmen. Auch in diesem Fall können der Schneidspalt und die Messerüberdeckung zur Maximierung der Messerstandzeit einstellbar sein. Die im Zuge des Besäumens erzeugten Saumstreifen werden durch Kanäle von den Besäumköpfen zwischen den Messertrommeln der Saumstreifenschneidköpfe geführt und dort in Stücke geschnitten, deren Länge dem Messerabstand am Umfang der Messertrommeln entspricht. Die geschnittenen Saumstreifenstücke fallen auf einen Förderer und werden aus der jeweiligen Bandbehandlungslinie heraus abtransportiert.

Die Obermesser und Untermesser der Besäumköpfe unterliegen dem Verschleiß und müssen von Zeit zu Zeit ausgewechselt werden. Dazu werden die Besäumköpfe aus der Betriebsposition in eine Warteposition auseinandergefahren. Der Messerwechsel kann bis zu zwei Stunden dauern. Damit während dieser Zeit weiter besäumt werden kann, werden Drehkopf-Doppelbesäumköpfe eingesetzt, bei denen jeweils zwei Besäumköpfe auf einem Drehteller antriebs- und bedienseitig aufgebaut sind. Jeweils ein Besäumkopf befindet sich in Betriebsposition, der andere Besäumkopf dagegen in Messerwechselposition. Der Wechselzyklus von einem Besäumkopf zu einem anderen Besäumkopf dauert lediglich 1 bis 2 Minuten.

Die Messerstandzeiten der Saumstreifenschneidköpfe sind in der Regel länger als die der Besäumköpfe. Wegen dieser längeren Standzeiten werden häufig Drehkopf-Doppelbesäumköpfe mit Einzel-Saumstreifenschneidköpfen kombiniert.

Allerdings kann es zu Störungen, z. B. zu einem Saumstreifenstau in den Saumstreifenkanälen kommen, welche zum Stillstand der Bandbehandlungslinie führen. Auch können Bandkantenbeschädigungen zu vorzeitigen Messerausfällen an den Saumstreifenschneidköpfen führen. Aus diesem Grunde ist es bekannt, Bandbehandlungslinien mit im Tandem angeordneten Saumstreifenschneidköpfen auszurüsten, um eine hohe Betriebsverfügbarkeit zu erzielen. Bei einer derartigen Tandemversion befindet sich jeweils ein Saumstreifenschneidkopf in Betriebstellung, der andere dagegen in Warte- bzw. Messerwechselposition. Ein Nachteil dieser Ausführungsform in Tandembauweise ist der hohe Platzaufwand der zumindest bei bereits eingerichteten Bandbehandlungslinien häufig nicht gegeben ist. Zudem ist diese Lösung verhältnismäßig teuer.

Nach einer anderen bekannten Lösung sind auf jeweils einem antriebs- und bedienseitigen Drehteller jeweils zwei Besäumköpfe mit getrennten Saumstreifenschneidköpfen in einem Winkel von 90° - in Tellerdraufsicht betrachtet - angeordnet. Auch in diesem Fall ist ein verhältnismäßig hoher Platzbedarf nachteilig, zumal die Besäumköpfe und Saumstreifenschneidköpfe einerseits mit eigenen Antrieben ausgerüstet sind, andererseits in eigenen Gehäusen untergebracht sind. Deshalb werden verhältnismäßig große Drehteller benötigt, außerdem zwei unterschiedliche Warte-bzw. Messerwechselpositionen in Abhängigkeit von den jeweils im Einsatz befindlichen Besäumköpfen und Saumstreifenschneidköpfen.

Der Erfindung liegt die Aufgabe zugrunde, eine Vorrichtung zum Besäumen von Bändern, insbesondere Metallbändern, und Saumstreifenschneiden von im Zuge des Besäumens erzeugten Saumstreifen der eingangs beschriebenen Ausführungsform zu schaffen, die sich durch eine platzsparende, wartungsfreundliche und kostengünstige Bauweise mit hoher Betriebssicherheit und -verfügbarkeit für das Besäumen und Saumstreifenschneiden auszeichnet.

Diese Aufgabe löst die Erfindung bei einer gattungsgemäßen Vorrichtung dadurch, dass auf jedem Drehteller die beiden Besäumköpfe mit den ihnen zugeordneten Saumstreifenschneidköpfen in Tellerdraufsicht in einem Winkel von 180° mit in entgegengesetzter Richtung positionierten Saumstreifenschneidköpfen angeordnet sind. Danach sind die Besäumköpfe praktisch nebeneinander angeordnet, während die in entgegengesetzter Richtung positionierten Saumstreifenschneidköpfe sich gleichsam auf einer Diagonalen befinden. Das hat zur Folge, dass sich verhältnismäßig kleine Drehteller verwirklichen lassen. Hinzu kommt, dass lediglich eine einzige Warte- bzw. Messerwechselposition für die jeweiligen Besäumköpfe und Saumstreifenschneidköpfe erforderlich ist, nämlich aufgrund einer 180°-Drehung aus der Betriebsposition in eben diese Warte- und Messerwechselposition und umgekehrt. In diesem Zusammenhang lehrt die Erfindung nach einem weiteren Vorschlag von besonderer Bedeutung, dass zu jedem Drehteller lediglich ein einziger Antriebstrang für die Besäumköpfe und Saumstreifenschneidköpfe führt, und das der Antriebstrang mit in Tellerdraufsicht in einem Winkel von 180° angeordneten und gegebenenfalls in entgegengesetzter Richtung positionierten Antrieben für die Besäumköpfe und Saumstreifenschneidköpfe ein- und auskuppelbar ist. Dabei weist der Antriebstrang die eine Kupplungshälfte auf, während sich an einem Besäumkopf bzw. Saumstreifenschneidkopf die andere Kupplungshälfte befindet, wobei auch die Kupplungshälften gegebenenfalls in entgegengesetzter Richtung auf einer Diagonalen ausgerichtet sind. Ferner empfiehlt die Erfindung in diesem Zusammenhang, dass die beiden Besäumköpfe mit ihren dazugehörigen Saumstreifenschneidköpfen auf dem jeweiligen Drehteller in einem gemeinsamen Gehäuse untergebracht sind, so dass im Ergebnis eine kompakte, wartungsfreundliche und kostengünstige Konstruktion mit hoher Betriebssicherheit und - verfügbarkeit zum Besäumen und Saumstreifenschneiden zur Verfügung steht. Durch die Anordnung der Besäumköpfe und Saumstreifenschneidköpfe in lediglich einem einzigen Gehäuse können auch die die erzeugten Saumstreifen abführenden Saumstreifenkanäle verhältnismäßig kurz gehalten werden. Dadurch wird die Gefahr von Betriebsstörungen in Folge eines Saumstreifenstaus erheblich reduziert. Denn je länger ein Saumstreifenkanal ist, umso größer ist das Risiko eines Saumstreifenstaus mit einem daraus resultierenden Stillstand der Bandbehandlungslinie.

Weitere erfindungswesentliche Merkmale sind im Folgenden aufgeführt. So sieht die Erfindung vor, dass die Besäumköpfe oder zumindest deren Untermesser und die Saumstreifenschneidköpfe bzw. deren Messertrommeln auf einem Drehteller von einem gemeinsamen Antrieb bzw. Motor angetrieben sind. Das ist durch die Integration der Besäumköpfe und Saumstreifenschneidköpfe in einem einzigen Gehäuse möglich. Im Rahmen der Erfindung können die Besäumköpfe grundsätzlich aber auch im Durchziehbetrieb ohne Antrieb gefahren werden. - Eine bevorzugte Ausführung von der Erfindung sieht vor, dass die Bandbreiteneinstellung der Drehteller entsprechend dem durch das Bandbreitenfertigmaß vorgegebenen Abstand der Obermesser erfolgt, also unter Berücksichtigung des zweifachen Schneidspaltes zwischen den Obermessern und Untermessern der Besäumköpfe. Insoweit wird also für die Bandbreiteneinstellung die Position der Obermesser berücksichtigt, da sich die besäumte Bandbreite aus dem Abstand der Obermesser ergibt und vorzugsweise die Obermesser als einstellbare Messer ausgeführt sind, während die Untermesser nicht einzeln einstellbar sind. Aus diesem Grunde erfolgt die Einstellung des jeweiligen Schneidspaltes und die Überdeckung von jeweils Obermesser und Untermesser für den Besäumvorgang vorzugsweise mittels des betreffenden Obermessers. Aber auch der Schneidspalt der Saumstreifenschneidköpfe kann einstellbar sein, um die Messerstandzeit der Messertrommeln der Saumstreifenschneidköpfe zu optimieren. - Endlich sieht die Erfindung vor, dass der mittlere Abstand von den Besäumköpfen zu den zugehörigen Saumstreifenschneidköpfen kleiner als das 2,5-fache der Messerdurchmesser der Besäumköpfe gewählt ist, und folglich so klein wie möglich gewählt ist, um zwischen den Besäumköpfen und den Saumstreifenschneidköpfen eine Verwindung oder Verhedderung der Saumstreifen und folglich einen Saumstreifenstau auf einen möglichst kurzen Saumstreifenweg zu verhindern.

Im Folgenden wird die Erfindung anhand einer lediglich ein Ausführungsbeispiel darstellenden Zeichnung näher erläutert. Es zeigen:

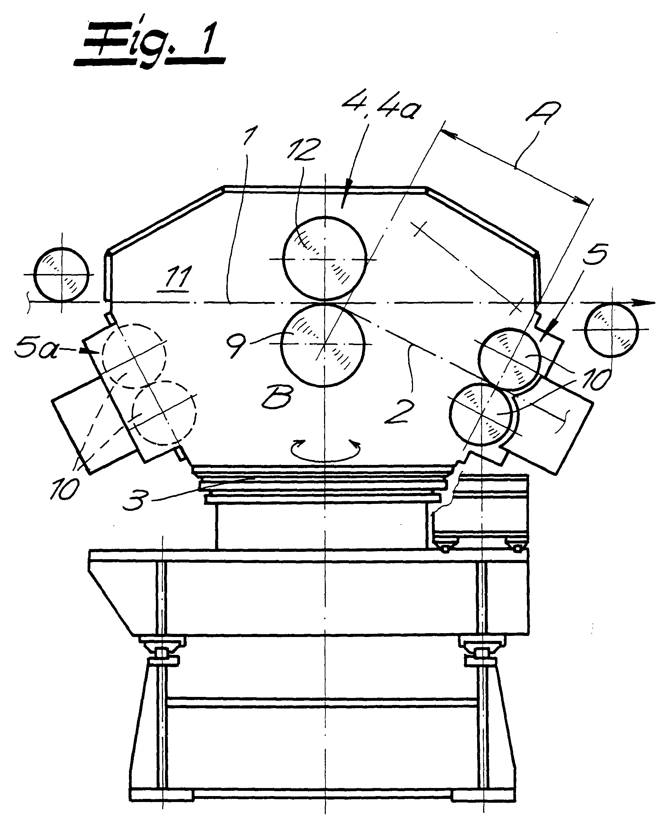

- Fig. 1: eine erfindungsgemäße Besäum- und Saumstreifenschneidvorrichtung in schematischer Seitenansicht,

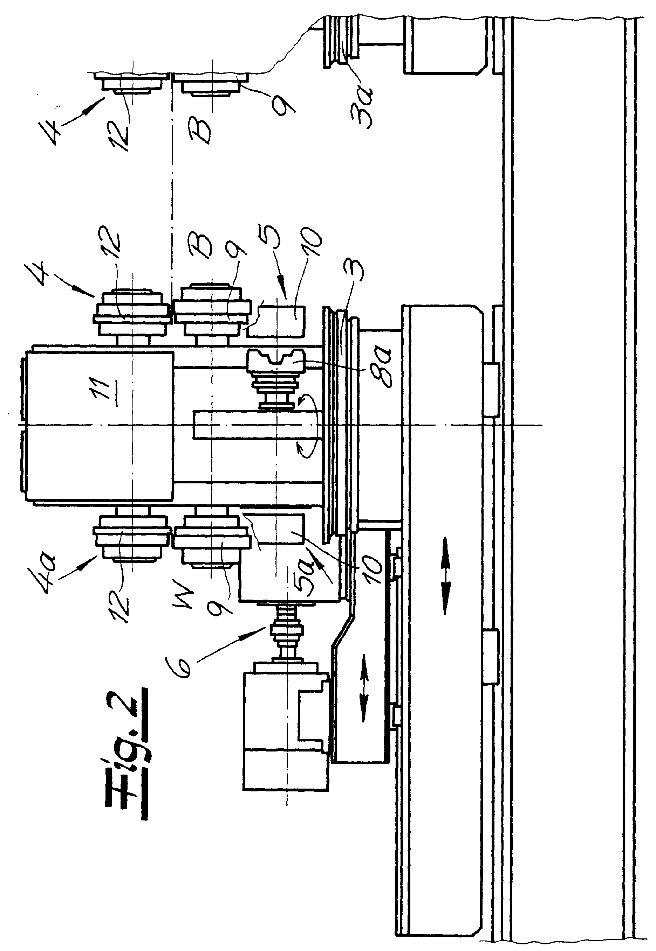

- Fig. 2: eine Stirnansicht auf den Gegenstand nach Fig. 1,

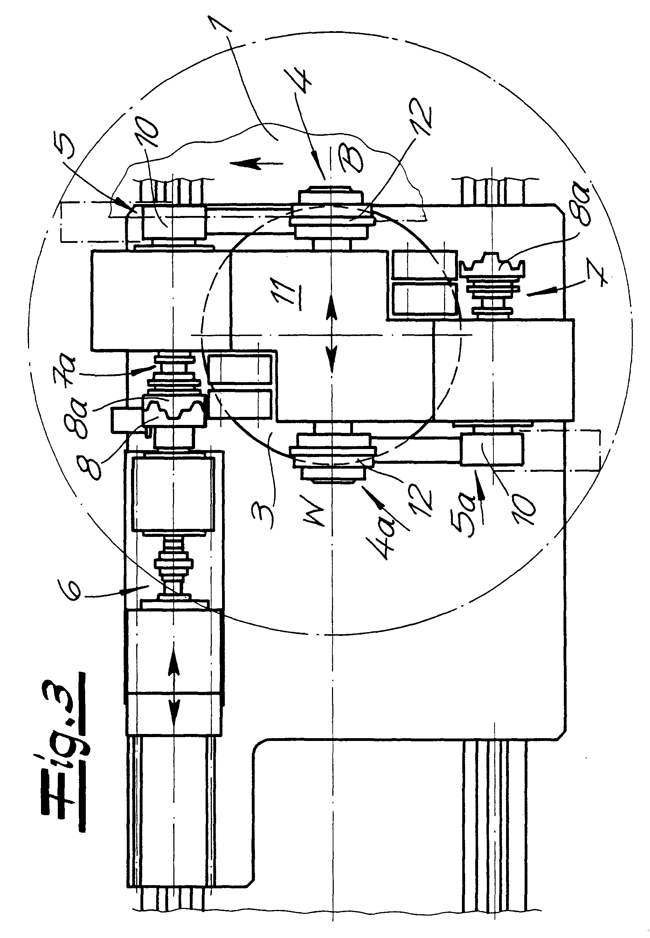

- Fig. 3: eine Draufsicht auf den Gegenstand nach Fig. 1 und

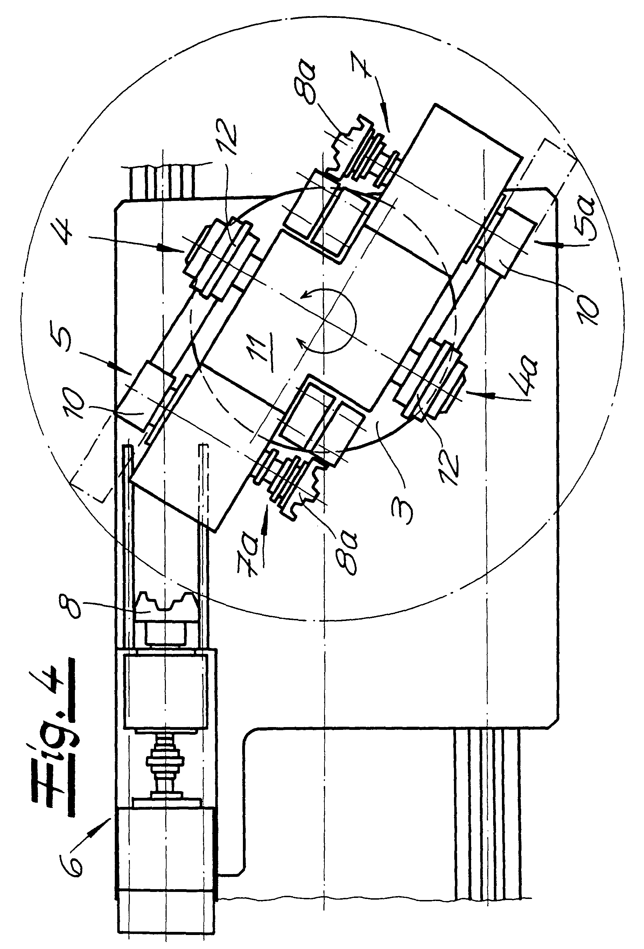

- Fig. 4: den Gegenstand nach Fig. 3 im Zuge der Überführung der in Betriebsposition befindlichen Besäumköpfe und Saumstreifenschneidköpfe in Warte- bzw. Messerwechselposition und

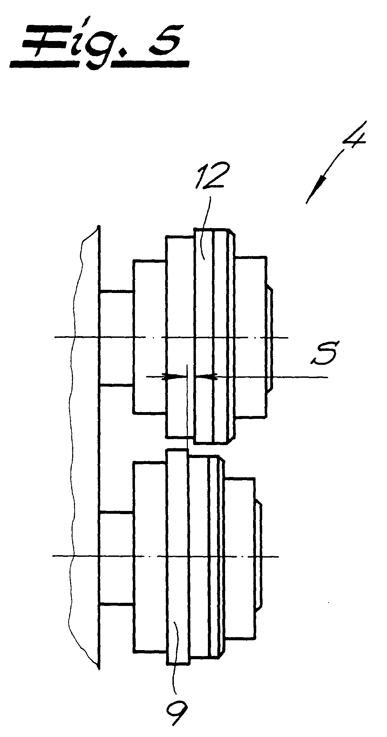

- Fig. 5: einen vergrößerten Ausschnitt aus dem Gegenstand nach Fig. 2 zur Verdeutlichung eines zwischen Obermesser und Untermesser eines Besäumkopfes eingestellten Schneidspaltes.

In den Figuren ist eine Vorrichtung zum Besäumen von Metallbändern 1 und Saumstreifenschneiden von im Zuge des Besäumens erzeugten Saumstreifen 2 dargestellt. Diese Vorrichtung weist beidseitig des jeweiligen Metallbandes 1 angeordnete und in Bezug auf die Bandbreite verstellbare Drehteller 3, 3a mit jeweils zwei auf einem Drehteller 3 bzw. 3a angeordneten Besäumköpfen 4, 4a und zwei Saumstreifschneidköpfen 5, 5a auf, von denen sich auf jedem Drehteller 3, 3a jeweils ein Besäumkopf und ein Saumstreifenschneidkopf 5 in Betriebsstellung B und ein Besäumkopf 4a und ein Saumstreifenschneidkopf 5a in Wartestellung W und folglich Messerwechselstellung befinden. Auf jedem Drehteller 3, 3a sind die beiden Besäumköpfe 4, 4a mit den ihnen zugeordneten Saumstreifenschneidköpfen 5, 5a in Tellerdraufsicht in einem Winkel von 180° mit in entgegengesetzter Richtung positionierten Saumstreifenschneidköpfen 5, 5a angeordnet. Zu jedem Drehteller 3, 3a führt ein Antriebstrang 6 für die Besäumköpfe 4, 4a und Saumstreifenschneidköpfe 5, 5a dieses Drehtellers 3 bzw. 3a. Der Antriebstrang 6 ist mit in Tellerdraufsicht in einem Winkel von 180° angeordneten und in entgegengesetzter Richtung positionierten Antrieben 7, 7a für die Besäumköpfe 4, 4a oder Saumstreifenschneidköpfe 5, 5a ein- und auskuppelbar. Dazu weist der Antriebstrang 6 endseitig eine Kupplungshälfte 8, weisen ferner die Saumstreifenschneidköpfe 5, 5a die andere Kupplungshälfte 8a auf. Die Kupplungshälften 8a der Saumstreifenschneidköpfe 5, 5a sind ebenfalls in Tellerdraufsicht in einem Winkel von 180° in entgegengesetzter Richtung auf gleichsam einer Diagonalen angeordnet. In diesem Fall sind die Besäumköpfe 4, 4a oder zumindest deren Untermesser 9 und die Saumstreifenschneidköpfe 5, 5a bzw. deren Messertrommeln 10 auf dem jeweiligen Drehteller 3 bzw. 3a von einem gemeinsamen Antrieb bzw. Motor angetrieben.

Auf jedem Drehteller 3, 3a sind die beiden Besäumköpfe 4, 4a mit ihren dazugehörigen Saumstreifenschneidköpfen 5, 5a in einem gemeinsamen Gehäuse 11 untergebracht. Die Besäumköpfe 4, 4a können im Übrigen angetriebene Untermesser 9 und/oder Obermesser 12 aufweisen.

Die Bandbreiteneinstellung der Drehteller 3, 3a erfolgt entsprechend dem durch das Bandbreitenfertigmaß vorgegebenen Abstand der Obermesser 12, also unter Berücksichtigung des zweifachen Schneidspaltes S zwischen den Obermessern 12 und Untermessern 9. Die Einstellung des jeweiligen Schneidspaltes S und die Überdeckung von jeweils Obermesser 12 und Untermesser 9 erfolgt für den Besäumvorgang mittels des bzw. der Obermesser 12. Auch der Schneidspalt der Saumstreifenschneidköpfe 5, 5a ist einstellbar.

Der mittlere Abstand A von den Besäumköpfen 4, 4a zu den zugehörigen Saumstreifenschneidköpfen 5, 5a ist kleiner als das 2,5-fache der Messerdurchmesser der Besäumköpfe 4, 4a.

## Patentansprüche

1. Vorrichtung zum Besäumen von Bändern, insbesondere Metallbändern, und Saumstreifenschneiden von im Zuge des Besäumens erzeugten Saumstreifen, mit beidseitig des jeweiligen Metallbandes angeordneten und in Bezug auf die Bandbreite verstellbaren Drehtellern mit jeweils zwei auf einem Drehteller angeordneten Besäumköpfen und Saumstreifenschneidköpfen, von denen sich auf jedem Drehteller jeweils ein Besäumkopf und ein Saumstreifenschneidkopf in Betriebstellung und ein Besäumkopf und ein Saumstreifenschneidkopf in Wartestellung befinden, **dadurch gekennzeichnet, dass** auf jedem Drehteller (3, 3a) die beiden Besäumköpfe (4, 4a) mit den ihnen zugeordneten Saumstreifenschneidköpfen (5, 5a) in Tellerdraufsicht in einem Winkel von 180° mit in entgegengesetzter Richtung positionierten Saumstreifenschneidköpfen (5 bzw. 5a) angeordnet sind.

2. Vorrichtung nach Anspruch 1, **dadurch gekennzeichnet, dass** zu jedem Drehteller (3, 3a) ein Antriebstrang (6) für die Besäumköpfe (4, 4a) und/oder Saumstreifenschneidköpfe (5, 5a) führt, und dass der Antriebstrang (6) mit in Tellerdraufsicht in einem Winkel von 180° angeordneten und in entgegengesetzter Richtung positionierten Antrieben für die Besäumköpfe (4, 4a) und Saumstreifenschneidköpfe (5, 5a) ein- und auskuppelbar ist.

3. Vorrichtung nach Anspruch 1 oder 2, **dadurch gekennzeichnet, dass** die beiden Besäumköpfe (4, 4a) mit ihren dazugehörigen Säumstreifenschneidköpfen (5, 5a) auf dem jeweiligen Drehteller (3 bzw. 3a) in einem gemeinsamen Gehäuse (11) untergebracht sind.

4. Vorrichtung nach einem der Ansprüche 1 bis 3, **dadurch gekennzeichnet, dass** die Besäumköpfe (4, 4a) angetriebene Untermesser (9) und/oder Obermesser (12) aufweisen.

5. Vorrichtung nach einem der Ansprüche 1 bis 4, **dadurch gekennzeichnet, dass** die Besäumköpfe (4, 4a) oder zumindest deren Untermesser (9) und die Saumstreifenschneidköpfe (5, 5a) auf einem Drehteller (3 bzw. 3a) von einem gemeinsamen Antrieb bzw. Motor angetrieben sind.

6. Vorrichtung nach einem der Ansprüche 1 bis 5, **dadurch gekennzeichnet, dass** die Bandbreiteneinstellung der Drehteller (3, 3a) entsprechend dem durch das Bandbreitenfertigmaß vorgegebenen Abstand der Obermesser (12) erfolgt.

7. Vorrichtung nach einem der Ansprüche 1 bis 6, **dadurch gekennzeichnet, dass** die Einstellung des jeweiligen Schneidspaltes (S) und die Überdeckung von jeweils Obermesser (12) und Untermesser (9) für den Besäumvorgang mittels des Obermessers (12) erfolgt.

8. Vorrichtung nach einem der Ansprüche 1 bis 7, **dadurch gekennzeichnet, dass** der Schneidspalt der Saumstreifenschneidköpfe (5, 5a) einstellbar ist.

9. Vorrichtung nach einem der Ansprüche 1 bis 8, **dadurch gekennzeichnet, dass** der mittlere Abstand (A) von den Besäumköpfen (4, 4a) zu den zugehörigen Saumstreifenschneidköpfen (5, 5a) kleiner als das 2,5-fache des Messerdurchmessers der Besäumköpfe gewählt ist.
